# EUROPEAN PATENT APPLICATION

(11) **EP 4 737 113 A1**
(43) Date of publication of application: **06.05.2026**
(21) Application number: 24831486.6
(22) Date of filing: 21.05.2024
(51) Int. Cl.: B32B 5/26, B29B 11/16, B32B 5/28, D04H 3/009, D04H 3/011, D04H 3/16, D06M 17/00, B29K 105/08

(54) **REINFORCED FIBER SUBSTRATE**

(30) Priority: 30.06.2023 JP 2023108287
(71) Applicant: TEIJIN LIMITED, Kita-ku, Osaka-shi, Osaka 530-0005 (JP)
(72) Inventor: NAKAGAWA, Hiroki, Osaka-shi, Osaka 530-0005 (JP); OSAKI, Kohei, Osaka-shi, Osaka 530-0005 (JP)
(74) Representative: Gulde & Partner
(86) International application number: PCT/JP2024/018649
(87) International publication number: WO 2025/004614

(57) **Abstract**

An object of the present invention is to provide a reinforcing fiber substrate having a resin material layer, wherein the reinforcing fiber substrate exhibiting excellent microcrack resistance and sufficient mechanical strength and further exhibiting good molding robustness; and the present invention relates to a reinforcing fiber substrate having one or more reinforcing fiber layers containing reinforcing fibers and one or more resin material layers containing fibers of a thermoplastic resin, characterized in that the thermoplastic resin has a melting point of more than 180°C and less than or equal to 250°C and a weight-average molecular weight Mw of the thermoplastic resin of 15,000 to 28,000.

## Description

### FIELD

The present invention relates to a reinforcing fiber substrate and a method for producing the same. The present invention also relates to a preform material and a fiber-reinforced composite material having the reinforcing fiber substrate, and to methods for producing them.

### BACKGROUND

Fiber-reinforced composite materials (also referred to as fiber-reinforced resin composite materials or composites) have been used in a wide range of fields, such as sports and leisure applications including fishing rods and golf shafts, and industrial applications including automobiles and aircraft, due to their light weight, high strength, and high rigidity. The fiber-reinforced composite material can be produced, for example, by impregnating a reinforcing fiber substrate (in particular, a reinforcing fiber substrate composed of carbon fibers) with a matrix resin, and then curing it. Methods of molding a fiber-reinforced composite material include a method of impregnating a reinforcing fiber substrate with a resin in advance and then molding it into the form of a sheet to form a prepreg (an intermediate substrate) which is molded into a fiber-reinforced composite material, and a method of impregnating a reinforcing fiber substrate disposed in a mold with a liquid resin (i.e., for example, an uncured curable resin or a molten thermoplastic resin) and curing or solidifying it to obtain a fiber-reinforced composite material (Resin Transfer Molding method; RTM method).

The reinforcing fiber substrate often comprises a plurality of reinforcing fiber layers, in particular reinforcing fiber sheets. Examples of the reinforcing fiber layer include a woven fabric in which reinforcing fibers as warp yarns and weft yarns have been woven by plain weaving, satin weaving, etc. In such a woven fabric, for example, reinforcing fibers as warp yarns and reinforcing fibers as weft yarns run orthogonally.

It is also possible to use a unidirectional (UD) reinforcing fiber layer in which reinforcing fibers are aligned in one direction. Such unidirectional reinforcing fiber layers include a unidirectional woven fabric (a UD-woven fabric). The unidirectional woven fabric is a woven fabric composed of reinforcing fibers aligned in one direction as warp yarns and auxiliary yarns as weft yarns, and is a so-called cord fabric.

Further, a non-crimp fabric may also be used as a reinforcing fiber substrate. In the non-crimp fabric, a plurality of reinforcing fiber layers made of reinforcing fibers aligned in one direction are stacked, and the stacked reinforcing fiber layers are stitched by a stitching yarn as an auxiliary yarn. In the non-crimp fabric, a stack of reinforcing fiber sheets made of reinforcing fibers aligned in one direction is integrated by being stitched with an auxiliary yarn (which is in particular referred to as a "stitch yarn"), wherein the auxiliary yarn penetrates the stack in the thickness direction.

In such a reinforcing fiber substrate, it is known to use a resin material layer (also referred to as a veil layer) such as a nonwoven fabric. The resin material layer is generally composed of thermoplastic resin fibers. For example, a nonwoven fabric containing thermoplastic resin fibers as a resin material layer can be disposed on a reinforcing fiber layer and/or between reinforcing fiber layers. The resin material layer may bring about advantageous effects in terms of interlayer fracture toughness, impact resistance, resin permeability, and substrate morphological stability.

Patent Literature 1 (PTL1) describes a reinforcing element for a curable composition, which comprises a resin-soluble thermoplastic veil suitable for being located between reinforcing fiber layers.

Patent Literature 2 (PTL2) describes an intermediate material, which is intended to be combined with a thermosetting resin to produce a composite part. The intermediate material is composed of a unidirectional layer of carbon fibers, each side of which is combined with a web of thermoplastic fibers having a specific thickness.

Patent Literature 3 (PTL3) describes a reinforcing fiber substrate; wherein the reinforcing fiber substrate has a reinforcing fiber aggregate and a mesh-like resin material disposed on at least one side surface thereof; wherein the resin material is a copolymer polyamide containing at least two polyamide components selected from polyamide 6, polyamide 6-6, polyamide 6-10, polyamide 12, polyamide 6-I; and wherein the melting point of the resin material is within the range from 80 to 180 °C.

### [Citation List]

### [Patent Literature]

[PTL 1] JP 2008-540766A
[PTL 2] JP 2012-506499A
[PTL 3] JP 2019-99987A

### [Technical Problem]

For the reinforcing fiber substrate, the fiber-reinforced composite material produced from the reinforcing fiber substrate is required to have excellent microcrack resistance and sufficient mechanical strength. In addition, it is also required to have good molding robustness. However, with the conventional reinforcing fiber substrate having a resin material layer (a veil layer), it was difficult to satisfy all of these characteristics.

An object of the present invention is to provide a reinforcing fiber substrate having a resin material layer, which exhibits excellent microcrack resistance and sufficient mechanical strength, and further exhibits good molding robustness. Another object of the present invention is to provide a preform material and a fiber-reinforced composite material having such a reinforcing fiber substrate, and to provide a method for producing them.

The microcracks are fine cracks of several to several tens of micrometers which may occur in a fiber-reinforced composite material used especially in aerospace applications. The microcracks tend to occur in an environment in which a cold-heat shock cycle is repeated for several hundred cycles or more, wherein the cold-heat shock cycle includes a rapid temperature change from a high temperature of about 70 to 100 °C to a low temperature of about -50 to -60 °C. A matrix resin contained in a fiber-reinforced composite material tends to shrink when the temperature drops from a high temperature to a low temperature; however, deformation of the matrix resin is suppressed by the presence of reinforcing fibers having a relatively low coefficient of thermal linear expansion with respect to the matrix resin, and as a result, residual thermal stress is accumulated inside the matrix resin. Consequently, due to the accumulation of fatigue stress by the cold-heat shock cycle, microcracks tend to occur. Similarly, other elements contained in the reinforcing fiber substrate, such as auxiliary yarns and nonwoven fabric fibers, often have different coefficient of thermal linear expansion from that of the matrix resin; and thus, residual thermal stress tends to concentrate at the interface in the fiber-reinforced composite material containing these elements, and an interlayer peeling and microcracks originating from the interfaces tend to occur.

### [Solution to Problem]

The problem of the present invention can be solved by the following embodiments according to the present invention.

### <Embodiment 1>

A reinforcing fiber substrate, comprising
one or more reinforcing fiber layers comprising reinforcing fibers, and
one or more resin material layers comprising fibers of a thermoplastic resin,
wherein the melting point of the thermoplastic resin is more than 180°C and 250°C or less,
and wherein the weight-average molecular weight Mw of the thermoplastic resin is 15,000 to 28,000.

### <Embodiment 2>

The reinforcing fiber substrate according to Embodiment 1, wherein the thermoplastic resin has a polydispersity (Mw/Mn) of 1.40 to 1.80.

### <Embodiment 3>

The reinforcing fiber substrate according to Embodiment 1 or 2, wherein the thermoplastic resin is a polyamide resin or a polyester resin.

### <Embodiment 4>

The reinforcing fiber substrate according to one of Embodiments 1 to 3, wherein the thermoplastic resin is a polyamide resin.

### <Embodiment 5>

The reinforcing fiber substrate according to one of Embodiments 1 to 4, wherein a mean fiber diameter of the fibers of the thermoplastic resin is 1µm to 60µm.

### <Embodiment 6>

The reinforcing fiber substrate according to one of Embodiments 1 to 5, wherein the one or more resin material layers are made of a nonwoven fabric containing fibers of a thermoplastic resin.

### <Embodiment 7>

The reinforcing fiber substrate according to Embodiment 6, wherein the one or more resin material layers are made of a long-fiber nonwoven fabric containing fibers of a thermoplastic resin.

### <Embodiment 8>

The reinforcing fiber substrate according to one of Embodiments 1 to 7, wherein the resin material layer or each of the plurality of the resin material layers is disposed on a surface of the reinforcing fiber layer or on a surface of any of the plurality of the reinforcing fiber layers.

### <Embodiment 9>

The reinforcing fiber substrate according to one of Embodiments 1 to 8, wherein the reinforcing fiber layer is a unidirectional woven fabric having the reinforcing fibers aligned in one direction as warp yarns and an auxiliary yarn as a weft yarn.

### <Embodiment 10>

The reinforcing fiber substrate as claimed in one of Embodiments 1 to 8, wherein the reinforcing fiber substrate comprises at least two said reinforcing fiber layers stacked one on top of the other, each of said at least two reinforcing fiber layers being composed of said reinforcing fibers aligned in one direction, said at least two reinforcing fiber layers being stitched by a stitch yarn as an auxiliary yarn.

### <Embodiment 11>

The reinforcing fiber substrate according to one of Embodiments 1 to 10, wherein the reinforcing fiber is a carbon fiber.

### <Embodiment 12>

A preform material comprising the reinforcing fiber substrate according to one of Embodiments 1 to 11 and a binder resin.

### <Embodiment 13>

A method for producing a preform material, comprising subjecting a composite body comprising the reinforcing fiber substrate according to one of Embodiments 1 to 11 and a binder resin to a heat treatment under pressure.

### <Embodiment 14>

A fiber-reinforced composite material comprising the reinforcing fiber substrate according to one of Embodiments 1 to 11 and a matrix resin impregnated in the reinforcing fiber substrate.

### <Embodiment 15>

A method for producing a fiber-reinforced composite material, comprising:
impregnating the reinforcing fiber substrate according to one of Embodiments 1 to 11 with a matrix resin; and
subjecting the reinforcing fiber substrate impregnated with the matrix resin to a heat curing treatment, in order to obtain a fiber-reinforced composite material.

### [ADVANTAGEOUS EFFECTS OF THE INVENTION]

According to the present invention, it is possible to provide a reinforcing fiber substrate having a resin material layer, which exhibits excellent microcrack resistance and sufficient mechanical strength, and further exhibits good molding robustness.

Further, according to the present invention, it is possible to provide a preform material and a fiber-reinforced composite material having such a reinforcing fiber substrate, and to further provide a method for producing them.

### BRIEF DESCRIPTION OF DRAWINGS

FIG. 1 shows a cross-sectional schematic view of a reinforcing fiber substrate according to one embodiment of the present invention.
FIG. 2 shows a perspective schematic view of the reinforcing fiber layer of FIG. 1.
FIG. 3 shows a cross-sectional schematic view of a reinforcing fiber substrate according to another embodiment of the present invention.
FIG. 4 shows a perspective view of a plurality of reinforcing fiber layers of FIG. 3.

### DESCRIPTION OF EMBODIMENTS

### Reinforcing fiber substrate

The reinforcing fiber substrate according to the present invention comprises:
one or more reinforcing fiber layers comprising reinforcing fibers, and
one or more resin material layers comprising fibers of a thermoplastic resin,
wherein the melting point of the thermoplastic resin is more than 180°C and 250°C or less,
and wherein the weight-average molecular weight Mw of the thermoplastic resin is 15,000 to 28,000.

Conventionally, it has been considered that when a thermoplastic resin fiber having a high melting point is used as a resin material layer (veil layer), mechanical properties and microcrack resistance become inferior due to low affinity with a matrix resin. Therefore, conventionally, it has been proposed to solve such a disadvantage by using, for a veil layer, a thermoplastic resin fiber having a relatively low melting point.

The present inventors have found that, when a thermoplastic resin fiber having a relatively low melting point is used, a resin material layer melts during a heat treatment in molding a fiber-reinforced composite material, which may adversely affect the molding robustness of the reinforcing fiber composite material. This means that a thickness may vary, depending on the curing speed.

On the other hand, in the present invention, while using a thermoplastic resin fiber having a high melting point as a thermoplastic resin fiber constituting a resin material layer, the molecular weight of the thermoplastic resin is optimized, which makes it possible to obtain a reinforcing fiber substrate having excellent mechanical strength and microcrack resistance and further having excellent molding robustness.

In particular, according to the present invention, since the resin material layer comprises resin fibers having a high melting point, good molding robustness can be ensured. Further, since the molecular weight of a resin of the thermoplastic resin fibers constituting the resin material layer is limited to a relatively low range, the affinity (adhesiveness) with the matrix resin in the composite material is improved, thereby good microcrack resistance is ensured.

Without wishing to be bound by theoretical, when the molecular weight of a thermoplastic resin is relatively low, the entanglement of the molecular chains of the thermoplastic resins forming the resin material layer tends to be loosened during a heat treatment, as compared with the case where the molecular weight is relatively high. Therefore, in this case, it is considered that a matrix resin easily enters the gaps between the molecular chains of the thermoplastic resin constituting the resin material layer loosened by heating, which makes it possible to easily obtain the entanglement between the molecular chains of the thermoplastic resin constituting the resin material layer and the matrix resin. As a result, it is considered that the interfacial adhesive strength (affinity) between the resin material layer and the matrix resin in the composite material is improved.

Furthermore, the reinforcing fiber substrate according to the present invention also exhibits sufficient properties in terms of the mechanical properties (in particular, compression properties after impact) of a fiber-reinforced composite material formed from the reinforcing fiber substrate.

Hereinafter, components of the present invention will be described in detail.

### <Reinforcing fiber substrate>

The reinforcing fiber substrate according to the present invention comprises one or more reinforcing fiber layers and one or more resin material layers. When the reinforcing fiber substrate has a resin material layer, advantageous effects may be brought about in particular in terms of the interlayer fracture toughness and impact resistance of a fiber-reinforced composite material. The reinforcing fiber substrate according to the present invention can be produced based on the description of the present disclosure and the known art, for example, by a method comprising disposing a resin material layer on the surface of a reinforcing fiber layer.

The reinforcing fiber substrate of the present invention preferably has an areal weight of 100 to 2000 g/m², more preferably 150 to 1500 g/m². Further, the thickness of the reinforcing fiber substrate according to the present invention can be appropriately selected, depending on the application of the molded article, etc., and may be 0.1 to 2 mm or even 0.5 to 1.5mm.

In order to facilitate understanding of the present invention, an exemplary structure of the reinforcing fiber substrate according to the present invention will be schematically described with reference to the drawings. The drawings are schematic illustrations for the purpose of facilitating understanding of the present invention and are not to scale and are not intended to limit the invention.

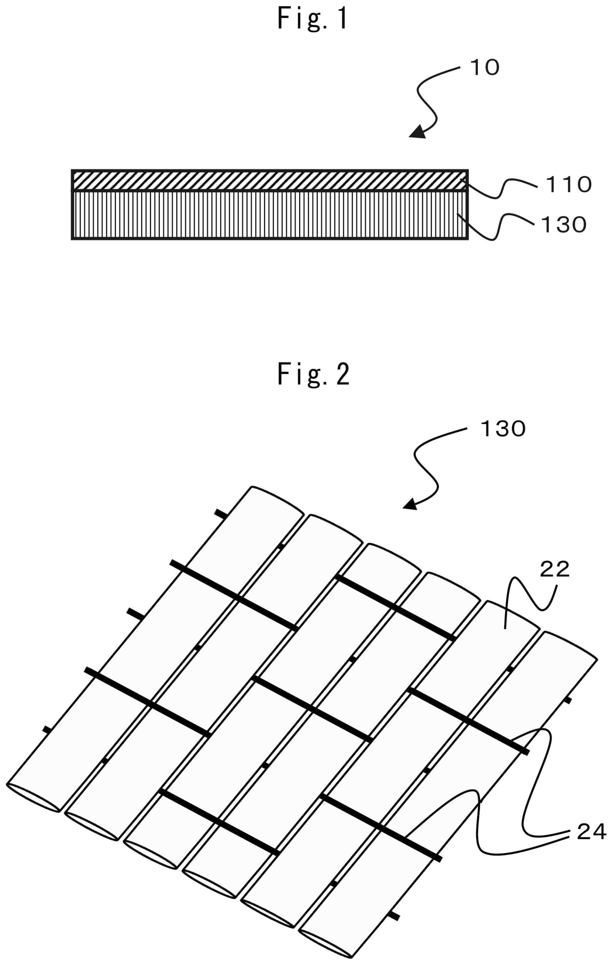

FIG. 1 shows a cross-sectional schematic diagram of a minimal configuration of the reinforcing fiber substrate 10 according to one embodiment of the present invention. The reinforcing fiber substrate 10 comprises a resin material layer 110 and a reinforcing fiber layer 130, which are stacked on top of each other. The resin material layer 110 is disposed on the surface of the reinforcing fiber layer 130. The resin material layer 110 comprises thermoplastic resin fibers (fibers of a thermoplastic resin). The resin material layer 110 may be a nonwoven fabric made of thermoplastic resin fibers. The reinforcing fiber layer 130 is composed of reinforcing fibers aligned in one direction. Although not shown in the drawing, the reinforcing fibers and/or the reinforcing fiber layers may be connected to each other by an auxiliary yarn, so that the integrity of the reinforcing fiber layers and/or the reinforcing fiber substrates is maintained.

FIG. 2 shows a perspective schematic view of the reinforcing fiber layer 130 of FIG. 1. In FIG. 2, the resin material layer 110 is not shown. In the embodiment of FIG. 2, the reinforcing fiber layers 130 is a unidirectional woven fabric (a UD-woven fabric). The unidirectional woven fabric is a so-called "cord fabric" and is composed of reinforcing fibers (in particular bundles of reinforcing fibers) 22 aligned in one direction and auxiliary yarns 24. The reinforcing fibers 22 as warp yarns and the auxiliary yarns 24 as weft yarns intersect each other to form a woven fabric.

It should be noted that, in FIG. 1 and FIG. 2, the minimum configuration of the reinforcing fiber substrate having one reinforcing fiber layer and one resin material layer has been described, but the reinforcing fiber substrate may have a plurality of reinforcing fiber layers and/or resin material layers. For example, the resin material layer may be stacked between a plurality of reinforcing fiber layers.

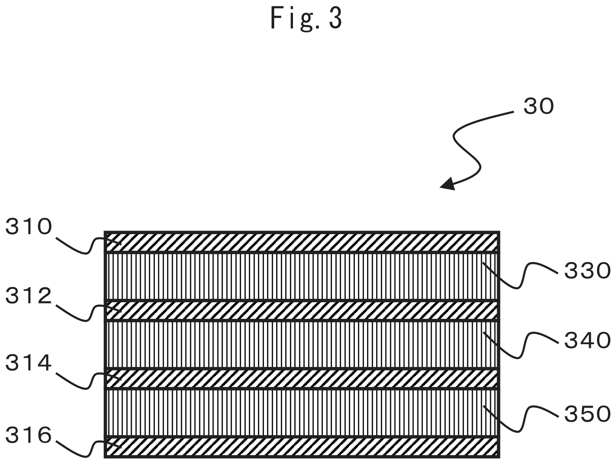

FIG. 3 shows a cross-sectional schematic view of a reinforcing fiber substrate 30 according to another embodiment of the present invention. The reinforcing fiber substrate 30 comprises a plurality of stacked resin material layers 310 to 316 and a plurality of reinforcing fiber layers 330, 340, and 350. Each of the resin material layers 312 and 314 are disposed between layers of the reinforcing fiber layers 330, 340, and 350. The resin material layers 310 and 316 are disposed as the outermost layers. The resin material layers 310 to 316 may be nonwoven fabrics composed of thermoplastic resin fibers. The reinforcing fiber layers 330, 340, 350 are made of reinforcing fibers aligned in one direction. Although not shown in the drawing, the reinforcing fibers of the reinforcing fiber layers 330, 340, and 350 may be connected to each other by an auxiliary yarn, and/or the reinforcing fiber layers 330, 340, and 350 may be connected to each other by an auxiliary yarn, so that the shape (in particular, the sheet shape) of the reinforcing fiber layers 330, 340, and 350 and the integrity of the reinforcing fiber substrate 30 are maintained.

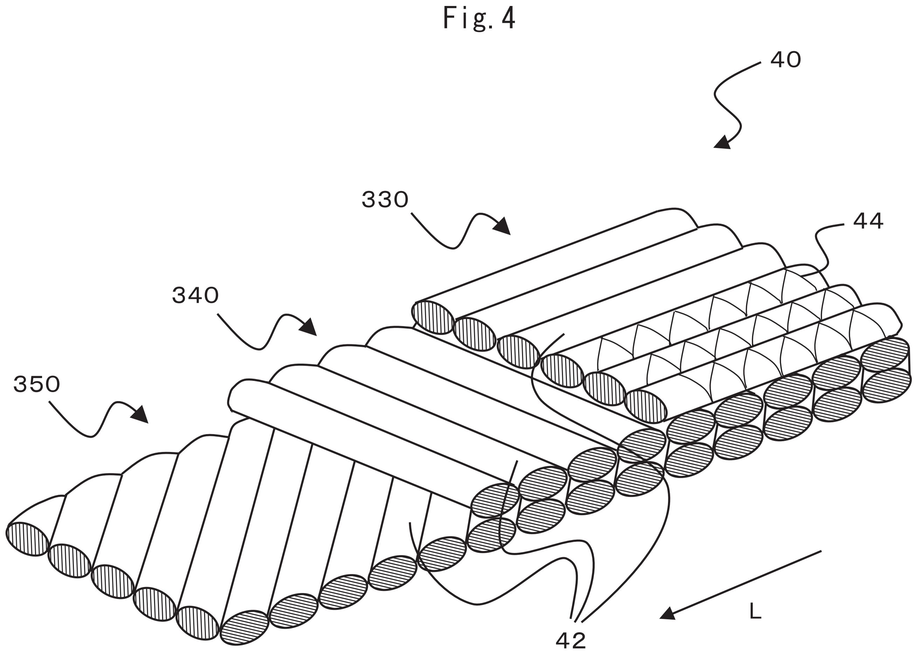

FIG. 4 is a perspective view corresponding to the reinforcing fiber substrate of FIG. 3. In FIG. 4, the resin material layers 310 to 316 are not shown. The plurality of reinforcing fiber layers 330, 340, 350 of FIG. 4 constitute a non-crimp fabric 40. In other words, the reinforcing fiber layers 330, 340, and 350 are each formed of reinforcing fibers 42 aligned in one direction, and these stacked reinforcing fiber layers are integrated by being stitched with a stitch yarn 44 as an auxiliary yarn. The stitch yarn 44 as an auxiliary yarn can extend continuously in the thickness direction of the stack over a plurality of reinforcing fiber layers. For simplicity, only a portion of the auxiliary yarn is shown in FIG. 4. In the non-crimp fabric, occurrence of bending of the reinforcing fibers is suppressed, and thus the mechanical properties of a fiber-reinforced composite material produced from the reinforcing fiber substrate can be further improved.

In the embodiment shown in FIG. 4, the reinforcing fibers constituting each of the plurality of reinforcing fiber layers have different extending directions. Namely, the reinforcing fibers constituting the reinforcing fiber layer 330 extend along the direction L shown in FIG. 4, the reinforcing fibers constituting the reinforcing fiber layer 340 extend at an angle of about 90° with respect to the direction L, and the reinforcing fibers constituting the reinforcing fiber layer 450 extend at an angle of about 45° with respect to the direction L.

Resin material layers 310 to 316 disposed on the reinforcing fiber layers may also be stitched together with the plurality of reinforcing fiber layers by the auxiliary yarn 44.

### <Reinforcing fiber layer>

The reinforcing fiber layer comprises reinforcing fibers.

As the reinforcing fiber layer, for example, a reinforcing fiber sheet can be used, and in particular, a reinforcing fiber sheet obtained by processing a continuous fiber bundle of reinforcing fibers into a sheet shape can be used. In one embodiment according to the present invention, the reinforcing fiber layer is a unidirectional (UD). Namely, the reinforcing fiber layer is formed from reinforcing fibers aligned along one direction.

In one embodiment according to the present invention, the reinforcing fiber layer is a unidirectional woven fabric (a UD woven fabric) and have reinforcing fibers aligned in one direction as warp yarns and an auxiliary yarn as a weft yarn (see FIG. 2 above).

In another embodiment of the present invention, the reinforcing fiber substrate is a non-crimp fabric (NCF) (see FIG. 4 above). As described above, the non-crimp fabric comprises at least two reinforcing fiber layers stacked one on top of the other, wherein the at least two reinforcing fiber layers are each composed of unidirectionally aligned reinforcing fibers, and wherein the at least two reinforcing fiber layers are stitched by a stitch yarn as an auxiliary yarn.

Preferably, in the reinforcing fiber substrate according to the present invention, the extending direction of the reinforcing fibers in one of the at least two reinforcing fiber layers is different from the extending direction of the reinforcing fibers in the other one of the reinforcing fiber layers. In particular, a plurality of reinforcing fiber layers made of reinforcing fibers aligned in one direction are sequentially stacked by changing the fiber axis direction. According to such an embodiment, the isotropy of the reinforcing fiber substrate is improved, which is preferable.

### (Reinforcing fiber)

Examples of the reinforcing fiber include carbon fibers, glass fibers, aramid fibers, boron fibers, and metal fibers. The reinforcing fiber is preferably a carbon fiber.

The mean length of the reinforcing fibers is not particularly limited, and may be, for example, 5 cm to 100 m.

### (Auxiliary yarn)

The reinforcing fiber layer according to the present invention may have an auxiliary yarn. As described above with respect to FIG.2 and FIG.4, the auxiliary yarn may serve to maintain the integrity of the reinforcing fiber layer and/or the reinforcing fiber substrate, by connecting the reinforcing fibers to each other and/or the reinforcing fiber layers to each other.

In one embodiment, the auxiliary yarn constitutes a weft yarn with respect to the reinforcing fibers as warp yarns. For example, the auxiliary yarn as a weft yarn intersect with the reinforcing fibers aligned in one direction at an angle of about 90°, thereby forming a unidirectional woven fabric (see FIG. 2 described above).

In another embodiment, the auxiliary yarn is a stitch yarn. A way of stitching a reinforcing fiber substrate with a stitch yarn is not particularly limited, but, for example, a stitch yarn stitches a plurality of reinforcing fiber layers to each other in a stack having a plurality of stacked reinforcing fiber layers made of reinforcing fibers aligned in one direction (refer to FIG. 4 described above).

The auxiliary yarn preferably has a fineness of 1 dtex to 75 dtex, more preferably a fineness of 15 dtex to 40 dtex.

In one preferred embodiment of the present invention, the auxiliary yearn comprises polyolefin fibers, polyamide resins, polyester resins, cellulose fibers, polyethersulfone (PES) resins, or polyetherimide (PEI) resins, or mixtures thereof. Alternatively, the auxiliary yarn may consist of at least one of these fibers.

### <Resin material layer>

The resin material layer comprises fibers of thermoplastic resin (thermoplastic resin fibers).

As illustrated for example in FIGS. 1 and 3, the resin material layer can be stacked together with the reinforcing fiber layer to form a stack. In such a stack, the resin material layer may be disposed between reinforcing fiber layers. Preferably, the resin material layer is adjacent to a reinforcing fiber layer, and in particular is arranged on the surface of a reinforcing fiber layer. When a reinforcing fiber substrate has a resin material layer, the impact resistance of a fiber-reinforced resin composite material produced from the reinforcing fiber substrate can be improved. A resin material layer and a reinforcing fiber layer may be bonded to each other by a binder. With regard to a binder, reference can be made to the description of a preform material which will be described later.

When the reinforcing fiber layer is a unidirectional woven fabric, the resin material layer may be disposed, for example, on a major surface of the unidirectional woven fabric.

When the reinforcing fiber substrate comprises a non-crimp fabric, the resin material layer may be disposed as the outermost layer (i.e., may be disposed on one or both sides of the main surface of a stack made of a plurality of reinforcing fiber layers), and/or may be disposed between a plurality of reinforcing fiber layers constituting the non-crimp fabric.

The resin material layer (in particular, one which is a nonwoven fabric) preferably has a thickness from 1 µm to 50 µm, more preferably from 2 µm to 40 µm, even more preferably from 3 µm to 35 µm.

The areal weight of the resin material layers is preferably 1 g/m² to 15 g/m², more preferably 2 g/m² to 10 g/m², particularly preferably 4 g/m² to 6 g/m².

In a reinforcing fiber substrate of one embodiment according to the present invention, the resin material layer is disposed on a surface of a reinforcing fiber layer. More specifically, one resin material layer or each of a plurality of resin material layers is disposed on the surface of one reinforcing fiber layer or on the surface of any of a plurality of reinforcing fiber layers.

In a preferred embodiment according to the present invention, the resin material layer is a sheet comprising thermoplastic resin fibers, in particular a nonwoven fabric comprising thermoplastic resin fibers.

In one embodiment of the present invention, the resin material layer is a nonwoven fabric comprising thermoplastic resin fibers, more preferably a nonwoven fabric made of thermoplastic resin fibers. The nonwoven fabric can be produced by the melt blowing process or the spunbond process. By using the melt-blowing method, a thin nonwoven fabric comprising fibers of a thermoplastic resin having a smaller fiber diameter can be produced, as compared with the case of using the spunbond method. On the other hand, when the spunbond method is used, since the fiber diameter is larger than that of the fiber produced by the melt-blow method, the nonwoven fabric is excellent in strength and handleability.

In one embodiment of the present invention, the resin material layer is made of a long fiber nonwoven fabric comprising fibers of a thermoplastic resin. It should be noted that the long fiber nonwoven fabric refers to a nonwoven fabric composed of continuous fibers of a thermoplastic resin having a length of 1 m or more.

### (Fiber of thermoplastic resin)

The resin material layer comprises fibers of a thermoplastic resin (also referred to as thermoplastic resin fibers).

The mass ratio of thermoplastic resin fibers is preferably 50% by mass or more, more preferably 80% by mass or more, and particularly preferably 90% by mass or more, with respect to a resin material layer. In particular, the resin material layer is made of thermoplastic resin fibers.

### (Melting point of thermoplastic resin)

The thermoplastic resin constituting the thermoplastic resin fiber according to the present invention has a melting point higher than 180°C and lower than or equal to 250°C. As described above, this makes it possible to provide a reinforcing fiber substrate having good molding robustness.

The melting point of the thermoplastic resin may be 181°C or higher, 182°C or higher, or 183°C or higher, and/or may be 245° C or less, 240°C or less, 235°C or less, 230°C or less, 225°C or less, or 220°C or less. The melting point of the thermoplastic resin is preferably 180°C to 240°C, more preferably 181°C to 230°C, and even more preferably 182°C to 220°C.

The melting point of the thermoplastic resin can be determined by means of a differential scanning calorimeter on the basis of standard JIS K7121 according to the following conditions: Temperature range: room temperature to 250°C

### Rate of temperature rise: 5°C/min

### (Weight-average molecular weight of thermoplastic resin)

The thermoplastic resin constituting the thermoplastic resin fiber according to the present invention has a weight-average molecular weight (Mw) of 15,000 to 28,000. As described above, by limiting the molecular weight of a resin of a thermoplastic resin fiber to a relatively low range, the affinity (adhesiveness) with a matrix resin in a composite material is improved, whereby good microcrack resistance is obtained.

The weight-average molecular weight (Mw) of the thermoplastic resin may be greater than or equal to 16,000, greater than or equal to 17,000, or greater than or equal to 18,000, and/or less than or equal to 27,500, less than or equal to 27,000, less than or equal to 26,500, less than or equal to 26,000, less than or equal to 25,500, less than or equal to 25,000, or less than or equal to 24,500. The weight-average molecular weight (Mw) of the thermoplastic resin is preferably from 16,000 to 27,000, more preferably from 16,500 to 26,000, and even more preferably from 17,000 to 25,000.

The weight-average molecular weight (Mw) of the thermoplastic resin can be determined by GPC (Gel Permeation Chromatography) method.

### (Number-average molecular weight of thermoplastic resin)

The thermoplastic resin constituting the thermoplastic resin fiber according to the present invention preferably has a number-average molecular weight (Mn) of 10,000 to 15, 000. The number-average molecular weight (Mn) of the thermoplastic resin is more preferably from 10,500 to 15,000, particularly preferably from 11,000 to 14,500.

### (Polydispersity of thermoplastic resin)

The polydispersity (Mw/Mn) of the thermoplastic resin constituting the thermoplastic resin fiber according to the present invention may be 1.00 to 2.50. The polydispersity is preferably from 1.30 to 2.00, more preferably from 1.40 to 1.80, and even more preferably from 1.45 to 1.75. When the polydispersity of a resin of a thermoplastic resin fiber is limited to a relatively low range, the variation in the molecular weight of the thermoplastic resin is reduced, and it is possible to reduce the probability of a high molecular weight range being present in the thermoplastic resin fiber. Therefore, when the polydispersity of a thermoplastic resin is limited to a relatively low range, it is possible to reduce the probability of a low affinity (adhesion) portion being present between the thermoplastic resin material and the matrix resin.

The polydispersity (Mw/Mn) of the thermoplastic resin can be calculated from the weight-average molecular weight and the number-average molecular weight of a thermoplastic resin which are determined by GPC method.

### (Glass transition temperature/softening temperature of thermoplastic resin)

The present invention also encompasses an embodiment in which a resin material layer includes fibers of a thermoplastic resin having no melting point, or even encompasses an embodiment in which a resin material layer is formed of a thermoplastic resin having no melting point.

When the resin material layer comprises (or is composed of) fibers of a thermoplastic resin having no melting point, the thermoplastic resin having no melting point has a glass transition temperature of 180 to 230°C. Namely, in one embodiment encompassed in the present disclosure, for thermoplastic resin fibers of a resin material layer, the melting point of the thermoplastic resin is greater than 180°C and less than or equal to 250°C, and/or the thermoplastic resin has a glass transition temperature of 180 to 230°C.

The glass-transition temperature of a thermoplastic resin can be determined by means of a differential scanning calorimeter on the basis of the standard JIS K7121, according to the following conditions:
Range of measuring temperature: -50 to 300 °C
Rate of temperature rise: 10°C/min

### (Type of thermoplastic resin)

Examples of the thermoplastic resin constituting the thermoplastic resin fiber include polyamide, polyimide, polyamide-imide, polyester, polybutadiene, polyurethane, polypropylene, polyetherimide (PEI), polysulfone, polyethersulfone (PES), polyphenylsulfone, polyphenylene sulfide (PPS), polyether ketone, polyether ether ketone (PEEK), polyarylamide, polyketone, polyphthalamide (PPA), polyphenylene ether, polybutylene terephthalate, polyethylene terephthalate, polyester-polyarylate, aramid, polybenzoxazole, and viscose. The thermoplastic resin fiber may comprise at least one of these thermoplastic resins, in particular may be made of at least one of these thermoplastic resins.

In a preferred embodiment according to the present invention, the thermoplastic resin constituting the thermoplastic resin fiber comprises a polyamide resin or a polyester resin, particularly preferably comprises a polyamide resin (PA resin), and in particular, is a polyamide resin or a polyester resin, and particularly preferably a polyamide resin (PA resin).

### (Polyamide resin)

Examples of the polyamide resin include PA6, PA12, PA11, PA66, PA610, PA612, PA1010, PA6/PA12 copolymers.

Among the polyamide resins, PA11 and PA612 are more preferred, and PA11 is most preferred. When these polyamide resins are used, a thermoplastic resin fiber satisfying the melting point and molecular weight according to the present invention is easily obtained.

### (Mean fiber diameter)

In a preferred embodiment according to the present invention, the thermoplastic resin fiber has a mean fiber diameter of 1 µm to 60 µm. When the mean fiber diameter of the thermoplastic resin fibers is within this range, it is possible to obtain a reinforcing fiber substrate having further improved resistance to microcracks.

The mean fiber diameter is preferably from 2 µm to 58 µm, more preferably from 3µm to 55 µm, particularly preferably from 4 µm to 45µm or even from 5 µm to 42 µm. In one particularly preferred embodiment, the mean fiber diameter is from 1 µm to 12 µm, from 3 µm to 10 µm, or even from 4µm to 8 µm.

The mean fiber diameter of thermoplastic resin fibers can be determined by calculating a mean value of fiber diameters measured for at least 30 fibers using an optical microscope.

### <Preform material>

The present invention also encompasses a preform material having a reinforcing fiber substrate according to the present invention. When a fiber-reinforced composite material is molded using the reinforcing fiber substrate of the present invention, the reinforcing fiber substrate can be used as it is. However, from the viewpoint of handleability and workability, it is preferable to use a preform material obtained by stacking and pre-molding the reinforcing fiber substrates.

The preform material according to the present invention may comprise the reinforcing fiber substrate according to the present invention and a binder resin.

### (Binder resin)

A resin material used as the binder resin is not particularly limited, and a thermosetting resin such as an epoxy resin or a vinyl ester resin, a thermoplastic resin such as a polyamide or a polyether sulfone, and a mixture thereof can be appropriately used. These resins may be used by being sprayed as a powder, or may be formed into a sheet, a nonwoven fabric, etc., and disposed onto the reinforcing fiber substrate of the present invention. Alternatively, it may be attached in advance to each of fibers constituting the reinforcing fiber substrate of the present invention.

The amount of the binder resin constituting the preform material is preferably 1 to 20 parts by mass, and more preferably 5 to 10 parts by mass with respect to 100 parts by mass of the reinforcing fiber substrate of the present invention. In one embodiment of the present invention, the preform material comprises the reinforcing fiber substrate according to the present invention and a binder resin which is 1 to 20 parts by mass per 100 parts by mass of the reinforcing fiber substrate.

The thickness of the preform material varies, depending on the intended use, but is preferably 1 to 40 mm.

### <Production of preform material>

A method for producing the preform material according to the present invention is not particularly limited, but is preferably produced by a method comprising heating under pressure a composite body (a precursor composite body) containing a reinforcing fiber substrate and a binder resin (in particular, a composite body (precursor composite body) made therefrom).

Specifically, for example, the production of the preform material is performed by stacking the reinforcing fiber substrates of the present invention, or the reinforcing fiber substrates of the present invention and the other reinforcing fiber substrates, on one surface of a preform-forming mold to a desired thickness; spraying a powder of a resin as a binder (a binder resin) or disposing a resin sheet; and premolding it by heating under pressure, such as a press using a heating plate. A resin is melted by heating, and the reinforcing fiber substrates of the present invention, or the reinforcing fiber substrate of the present invention and other reinforcing fiber sheet(s), are molded into the shape of the mold, and as a result of that, a preform material having the shape of the mold is formed. The conditions of heating under pressure can be appropriately selected according to the type of the constituent elements (e.g., a binder resin) of the preform material.

The preform material may be formed into a fiber-reinforced composite material by a known forming method such as a RTM method or a RFI method. The preform material produced by the above method retains its three-dimensional shape even after the preforming. Therefore, it is possible to move the preform material from a preform-forming mold to a fiber-reinforced-composite-material-forming mold without losing its shape. Consequently, a direct stack in a fiber-reinforced-composite-material-forming mold is not necessary, and thus the occupation time of the mold can be reduced, which results in the improved productivity of a fiber-reinforced composite material.

### <Fiber-reinforced composite material>

The present invention also encompasses a fiber-reinforced composite material (also referred to as a fiber-reinforced plastics, FRP; a composite) having the reinforcing fiber substrate according to the present invention. The fiber-reinforced composite material comprises a reinforcing fiber substrate according to the present invention and a matrix resin impregnated in the reinforcing fiber substrate.

### (Matrix resin)

As the matrix resin, a thermosetting resin or a thermoplastic resin is used. When the matrix resin contains a thermosetting resin, the thermosetting resin may be 30% by mass or more, 40% by mass or more, or may be 50% by mass or more, and/or may be 100 % by mass or less, 90% by mass or less, 80% by mass or less, or 70% by mass or less, with respect to the matrix resin.

As for the thermosetting resin, it includes epoxy resins, unsaturated polyester resins, phenol resins, melamin resins, polyurethane resins, silicone resins, maleimide resins, vinyl ester resins, cyanate ester resins, a pre-polymerized resin of maleimide resin and cyanate ester resin, urethane acrylate resins, phenoxy resins, alkyd resins, urethane resins, bismaleimide resins, polyimide resins and polyisomide resins with acetylene terminals, and polyimide resins with nadic acid ends. They can also be used as a mixture of one or more thereof. Among them, an epoxy resin, a vinyl ester resin, a bismaleimide resin, and a polyimide resin are particularly preferable, which have excellent heat resistance, elastic modulus, and chemical resistance.

### (Epoxy resin)

An epoxy resin usable as the thermosetting resin which can be used in the present invention is not particularly limited, but includes tetraglycidyl-4,4'-diaminodiphenylmethane, tetraglycidyl-4,4'-diaminodiphenyl sulfone, tetraglycidyl-3,3'-diaminodiphenylsulfone, tetraglycidyl-4,4'-diaminodiphenylether, tetraglycidyl-3,4'-diaminodiphenylether, , and other four-functional glycidylamine-type epoxy resins, triglycidyl-m-aminophenols, triglycidyl-p-aminophenols, triglycidyl isocyanurate, and other three-functional epoxy resins, diglycidyl aniline or its derivatives, such as diglycidyl-o-toluidine, diglycidyl -m-toluidine, diglycidyl-p-toluidine, diglycidyl-xylidine, diglycidyl-mesidine, diglycidyl anisidine, diglycidyl-phenoxyaniline, or diglycidyl-naphthylamine and derivatives thereof, bisphenol A diglycidyl ether, bisphenol F diglycidyl ether, bisphenol S diglycidyl ether, resorcinol diglycidyl ether, 1,6-naphthalenediol diglycidyl ether, and other two-functional epoxy resins. The epoxy resin may be used alone, or a mixture of a plurality of these epoxy resins may be used.

### (Curing agent)

For the thermosetting resin that can be used in the present invention, a known curing agent can be used. In particular, it is preferable to use an amine-based curing agent, from the viewpoint of mechanical properties of the cured product. It should be noted that the thermosetting resin that can be used in the present invention may or may not contain the curing agent in advance. If the thermosetting resin does not contain a curing agent, it can be mixed with the curing agent before or during curing.

Examples of the amine-based curing agent include a latent curing agent such as dicyandiamide, aliphatic polyamines, various isomers of aromatic polyamine-based curing agents, aminobenzoic acid esters, and acid anhydrides. Dicyandiamide is preferable because it is excellent in storage stability of a reinforcing fiber substrate impregnated with a matrix resin.

A curing agent suitable for RTM molding method may be any of polyamines having the above-described structure, and specific examples thereof include 4,4'-diaminodiphenylmethane, a derivative thereof, phenylenediamine, and a derivative thereof.

The total amount of the curing agent contained in the thermosetting resin that can be used in the present invention is an amount suitable for curing all the thermosetting resins (in particular, all the epoxy compounds) blended in a matrix resin, and is appropriately adjusted according to the types of the thermosetting resin (in particular, the epoxy compound) and the curing agent used.

Specifically, for example, the ratio of the number of epoxy groups contained in epoxy compound(s) in a matrix resin to the number of active hydrogens contained in curing agent(s) is preferably 0.7 to 1.3, more preferably 0.8 to 1.2, and particularly preferably 0.9 to 1.1. If the ratio is less than 0.7 or exceeds 1.3, the molar balance of epoxy groups and active hydrogens may be lost, and the crosslinking density of an obtained cured resin product may become insufficient, and heat resistance and mechanical properties such as elastic modulus and fracture toughness may become poor.

When the matrix resin contains a thermosetting resin, the matrix resin may contain a colorant, a filler, various additives, etc., in addition to a curing agent and a curing accelerator. In order to improve the impact resistance of the matrix resin, it is preferable to contain a thermoplastic resin component or resin particles. As the resin particles, for example, thermoplastic resin particles, thermosetting resin particles, and rubber particles can be used, and rubber particles are preferably used. Examples of the rubber particles include silicone rubber, polybutadiene rubber, and styrene butadiene rubber. One type of resin particles may be used, or two or more types of resin particles may be used in combination. The mean particle size of the resin particles may be from 0.01 µm to 1.0 µm or less, or even from 0.03 µm to 0.3 µm. The mean particle size of the resin particles can be determined by observing a cross section of a fiber-reinforced composite material with a scanning electron microscope or a transmission electron microscope; measuring the diameters of at least 50 resin particles; and calculating a mean value thereof. The observation can be performed at a magnification of 25,000×. If the resin particles are not perfectly circular, i.e., if the resin particles are elliptical, etc., the maximum diameter of a resin particle can be regarded as the particle diameter of the resin particle.

### (Thermoplastic resin component)

The matrix resin may further include a thermoplastic resin in addition to the thermosetting resin. Examples of the thermoplastic resin include an epoxy-resin-soluble thermoplastic resin and an epoxy-resin-insoluble thermoplastic resin.

The epoxy-resin-soluble thermoplastic resin adjusts the viscosity of the matrix resin and improves the impact resistance of the resulting fiber-reinforced composite material. The epoxy-resin-soluble thermoplastic resin is a thermoplastic resin in which part or all thereof can be dissolved in an epoxy resin at a molding temperature at which the fiber-reinforced composite material is molded or at a temperature lower than or equal to the molding temperature.

It should be noted that the term "part thereof is dissolved in an epoxy resin" means that, when a thermoplastic resin having a mean particle diameter of 20 to 50 µm is mixed at an amount of 10 parts by mass with respect to 100 parts by mass of an epoxy resin and then stirred at 190°C for 1 hour, the particles disappear or the size (particle diameter) of the particle changes by 10% or more.

On the other hand, the epoxy-resin -insoluble thermoplastic resin refers to a thermoplastic resin that does not substantially dissolve in an epoxy resin at a temperature at or below a temperature at which the fiber-reinforced composite material is molded. Namely, it means that, when the thermoplastic resin having a mean particle diameter of 20 to 50 µm is mixed at an amount of 10 parts by mass with respect to 100 parts by mass of an epoxy resin and then stirred at 190°C for 1 hour, the size of the particle does not change by 10% or more. It should be noted that, in general, the temperature at which a fiber-reinforced composite material is molded is 100 to 190°C. In addition, the particle diameter is visually measured by a microscope, and the mean particle diameter means a mean value of particle diameters of 100 randomly selected particles.

When an epoxy-resin-soluble thermoplastic resin is not completely dissolved, it is dissolved in an epoxy resin under the heat during the curing process of the epoxy resin, which can increase the viscosity of a matrix resin. This makes it possible to prevent a flow of the matrix resin (a phenomenon in which the matrix resin flows out from a reinforcing fiber substrate impregnated with the matrix resin) caused by a decrease in viscosity during the curing process.

The epoxy-resin-soluble thermoplastic resin is preferably a resin that dissolves 80% by mass or more in an epoxy resin at 190°C.

Specific examples of the epoxy-resin-soluble thermoplastic resin include polyethersulfone, polysulfone, polyetherimide, and polycarbonate. These may be used alone or used in combination of two or more.

The amount of the epoxy-resin-soluble thermoplastic resin contained in a matrix resin is appropriately adjusted according to the viscosity. From the viewpoint of processability of a prepreg and/or a fiber-reinforced composite material, the amount is preferably 5 to 90 parts by mass, more preferably 5 to 40 parts by mass, and particularly preferably 15 to 35 parts by mass, with respect to 100 parts by mass of epoxy resin(s) contained in the matrix resin. If the amount is less than 5 parts by mass, the resulting fiber-reinforced composite material may have insufficient impact resistance, which is not preferable. On the other hand, when the amount of the epoxy-resin-soluble thermoplastic resin exceeds 90 parts by mass, the viscosity becomes remarkably high, and the handleability of the reinforcing fiber substrate impregnated with the matrix resin may be remarkably deteriorated, which is not preferable.

The form of the epoxy-resin-soluble thermoplastic resin is preferably in the form of particles. The particulate epoxy-resin-soluble thermoplastic resin can be uniformly blended in a matrix resin. In addition, the obtained prepreg and/or fiber-reinforced composite material has high moldability.

The mean particle size of the epoxy-resin-soluble thermoplastic resin is preferably 1 to 50 µm, more preferably 3 to 30 µm. If it is less than 1 µm, the viscosity of the matrix resin is remarkably increased, so that it may be difficult to add a sufficient amount of the epoxy-resin-soluble thermoplastic resin to the matrix resin, which is not preferable. On the other hand, if it is more than 50 µm, it may be difficult to obtain a sheet having a uniform thickness when the matrix resin is processed into a sheet, and the dissolution rate into an epoxy resin tends to become slow, and the resulting fiber-reinforced composite material becomes non-uniform, which is not preferable.

When a matrix resin contains a thermosetting resin, the matrix resin may contain an epoxy-resin-insoluble thermoplastic resin in addition to the epoxy-resin-soluble thermoplastic resin. A part of the epoxy-resin-insoluble thermoplastic resin or the epoxy-resin-soluble thermoplastic resin (the epoxy-resin-soluble thermoplastic resin remaining without being dissolved in the matrix resin after curing) is in a state wherein particles thereof are dispersed in a matrix resin of a fiber-reinforced composite material (hereinafter, the dispersed particles are also referred to as "interlayer particles"). The interlayer particles inhibit the propagation of the impact experienced by a fiber-reinforced composite material. As a result, the impact resistance of the resulting fiber-reinforced composite material is improved.

Examples of the epoxy-resin-insoluble thermoplastic resin include polyamide, polyacetal, polyphenylene oxide, polyphenylene sulfide, polyester, polyamideimide, polyimide, polyether ketone, polyether ether ketone, polyethylene naphthalate, polyether nitrile, and polybenzimidazole. Among them, polyamide, polyamideimide, and polyimide are preferred because of their high toughness and heat resistance. Polyamides and polyimides are particularly excellent in improving the toughness of a fiber-reinforced composite material. These may be used alone or used in combination of two or more. A copolymer thereof can also be used.

In particular, the heat resistance of a resulting fiber-reinforced composite material can be particularly improved, by using a polyamide such as amorphous polyimide, nylon 6 (registered trademark) (a polyamide obtained by a ring-opening polycondensation reaction of caprolactam), nylon 11 (a polyamide obtained by a ring-opening polycondensation reaction of undecanelactam), nylon 12 (a polyamide obtained by a ring-opening polycondensation reaction of lauryl lactam), nylon 1010 (a polyamide obtained by a co-heavy reaction of sebacic acid and 1,10-decanediamine), or amorphous nylon (also called transparent nylon; a nylon which does not cause crystallization of a polymer or a nylon which has a very slow crystallization rate of a polymer).

The content of the epoxy-resin-insoluble thermoplastic resin in the matrix resin that can be used in the present invention is appropriately adjusted according to the viscosity of a matrix resin. From the viewpoint of processability of a prepreg and/or a fiber-reinforced composite material, the amount is preferably 5 to 50 parts by mass, more preferably 10 to 45 parts by mass, and particularly preferably 20 to 40 parts by mass, with respect to 100 parts by mass of epoxy resin(s) contained in a matrix resin. If the amount is less than 5 parts by mass, the resulting fiber-reinforced composite material may have insufficient impact resistance, which is not preferable. On the other hand, if the amount is more than 50 parts by mass, it may lowered the impregnation property of the matrix resin, the drapability of the reinforcing fiber substrate impregnated with the matrix resin, etc., which are not preferable.

Preferred mean particle diameters and shapes of the epoxy-resin-insoluble thermoplastic resin are the same as those of the epoxy-resin-soluble thermoplastic resin.

### <Production of fiber-reinforced composite material>

The method for producing a fiber-reinforced composite material is not particularly limited, and it may be produced by molding a prepreg in which a matrix resin has been impregnated in advance into a reinforcing fiber substrate, or it may be produced by a resin transfer molding method (RTM method), a resin film infusion molding method (RFI method), etc., wherein a reinforcing fiber substrate and a matrix resin may be combined at the same time as molding. Preferably, the reinforcing fiber substrate of the present invention is used in a molding process by a RTM method or a RFI method.

The fiber-reinforced composite material according to the present invention can preferably be produced by a method comprising the following steps:
(a) impregnating a matrix resin into the reinforcing fiber substrate according to the present invention (impregnation step), and
(b) subjecting the reinforcing fiber substrate impregnated with the matrix resin to a heat curing treatment to obtain a fiber-reinforced composite material (heat curing step).

### (Impregnation process)

In the impregnation step, the reinforcing fiber substrate according to the present invention is impregnated with a matrix resin.

The impregnation step can be performed, for example, by impregnating the reinforcing fiber substrate with a liquid resin (i.e., for example, an uncured curable resin or a thermoplastic resin in a molten state), which is cured or solidified. For a more detailed description of conditions of the impregnation step, for example, the following description regarding RTM process may be referred to.

### (Heat curing step)

In the heat curing step, the reinforcing fiber substrate impregnated with the matrix resin is heat-cured to obtain a fiber-reinforced composite material. For a more detailed description of conditions of the heat-curing step, for example, the following description regarding RTM method may be referred to.

### (RTM method)

The fiber-reinforced composite material according to the present invention is preferably obtained by a RTM method (Resin Transfer Molding method) from the viewpoint of efficiently obtaining a complex fiber-reinforced composite material. RTM method comprises a step of impregnating a reinforcing fiber substrate disposed in a mold with an uncured liquid thermosetting resin or a molten thermoplastic resin as a matrix resin, and a step of curing or solidifying the matrix resin to obtain a fiber-reinforced composite material.

In the present invention, with regard to a mold used for RTM method, a closed mold made of a rigid material may be used, or an open mold made of a rigid material and a flexible film (bag) may be used. In the latter case, a reinforcing fiber substrate can be placed between the open mold of rigid material and the flexible film. As the rigid material, known various materials, for example, a metal such as steel or aluminum, a fiber reinforced plastic (FRP), wood, gypsum, etc., can be used. As materials of the flexible film, polyamide, polyimide, polyester, fluororesin, silicone resin, etc., are used.

When a closed mold made of a rigid material is used in RTM method, a clamping under pressure and an injection of a matrix resin under pressure are usually conducted. In such a case, a suction port may be provided separately from an injection port, and the suction port may be connected to a vacuum pump for suction. It is also possible to perform the injection of a matrix resin simply at atmospheric pressure by suction without the use of special pressurization means. This method can be suitably used because the provision of a plurality of suction ports makes it possible to manufacture a large member material.

When an open mold made of a rigid material and a flexible film are used in RTM method, it is possible to perform the injection of a matrix resin simply at atmospheric pressure by suction without the use of special pressurization means. In order to achieve good impregnation by injection simply at atmospheric pressure, a resin diffusion medium may be used. Furthermore, it is preferable to apply a gel coat to the surface of the rigid material prior to the installation of a reinforcing fiber substrate.

When an epoxy resin is used as the matrix resin, the impregnation pressure at the time of impregnating a reinforcing fiber substrate with the epoxy resin by RTM method is appropriately determined in consideration of the viscosity/resin flow of the resin. The specific impregnation pressure is 0.001 to 10MPa, and preferably 0.01 to 1MPa. When a fiber-reinforced composite material is obtained using RTM method, the viscosity of the epoxy resin at 100°C is preferably less than 5000 mPa·s, and more preferably 1 to 1000mPa·s.

When a thermosetting resin is used as the matrix resin in RTM method, a reinforcing fiber substrate is impregnated with a matrix resin and then heat-cured. The mold temperature at the time of the heat-curing is usually selected to be higher than the mold temperature at the time of injection of the thermosetting resin. The mold temperature at the time of the heat-curing is preferably 80 to 200°C. The duration of the heat-curing is preferably from 1 minute to 20 hours. After the heat-curing has been completed, a fiber-reinforced composite material is removed by demolding. Thereafter, the obtained fiber-reinforced composite material may be heated at a higher temperature to be post-cured. The temperature of the post-curing is preferably 150 to 200°C, and the duration thereof is preferably 1 minute to 4 hours.

The amount of the matrix resin is preferably 20 to 60 parts by mass, and more preferably 30 to 40 parts by mass, with respect to 100 parts by mass of the reinforcing fiber substrate.

In the molding method, the viscosity of the matrix resin is preferably 0.01 to 1 Pa·s as the injection temperature. It is preferable to adjust the viscosity of the resin at the time of injection to the above range, for example by heat-treating the resin to be injected in advance.

### (Microcracks)

Since the fiber-reinforced composite material according to the present invention has the reinforcing fiber substrate according to the present invention, the crack density is reduced. Specifically, the crack density after the cold-heat shock test is preferably less than 0.5 /(cm·ply), more preferably 0.4 pieces/(cm·ply) or less, even more preferably 0.3 /(cm·ply) or less.

The cold-heat shock test (the thermal shock test) for measuring the crack density after the cold-heat shock test can be performed as follows:
Subjecting a fiber reinforced composite material to 1000 times of cold-heat cycles using a cold and heat shock tester. A cycle of the cold-heat cycle is set to consist of a plateau zone of -55°C for 15 minutes, followed by a temperature change zone for 15 minutes reaching a temperature of 70°C, followed by a plateau zone of 70°C for 15 minutes, followed by a temperature change zone for 15 minutes returning to a temperature of -55° C. The cycle is repeated 1000 times.

The crack density after the cold-heat shock test can be measured as follows:
The number of cracks in the cross section inside a test piece of a fiber-reinforced resin composite material after the cold-heat shock test is measured by observation using a microscope at a magnification of 200x. More specifically, the test piece after the cold-heat shock test (width 80 mm× length 50 mm× thickness 5 mm) is cut into four equal parts of width 40 mm× length 25 mm, the cut surfaces in the thickness direction are mirror-polished, and the long side and the short side respectively are used as the observation surfaces. Observation area of the microcracks of the microscopic observation is 50 mm² or more, and the measured number of cracks is divided by the number of laminations and the width of the observation surface, in order to calculate the crack density. The unit of crack density is: number/(cm·ply). The values of the crack density obtained from the observation of the long side and the short side are averaged to obtain the final crack density.

### <Application>

Applications (intended uses) of the reinforcing fiber substrate and the preform and the fiber-reinforced composite material (the composite) according to the present invention include, for example, a structural material of aircrafts, automobiles, railway vehicles and ships. Namely, the reinforcing fiber substrate according to the present invention and the composite manufactured using the same can be used as a material constituting a frame of a vehicle such as an aircraft, an automobile, a railway vehicle, and a ship.

### EXAMPLES

In the following, the present invention will be described in more detail with reference to examples. The examples do not limit the present invention.

### <Evaluation method>

Evaluations in Examples and Comparative Examples were performed as follows.

### (Melting point of thermoplastic resin)

The melting point of a thermoplastic resin of a thermoplastic resin fiber constituting a nonwoven fabric as a resin material layer (veil layer) was measured according to JIS K7121. Specifically, 3 mg of the nonwoven fabric was weighed into an aluminum pan and used as a sample. The temperature at the apex of the melting endothermic peak was measured by DSC (DSC3500 Sirius, manufactured by NETZSCH) as the melting point of the nonwoven fabric. When there were a plurality of melting endothermic peaks, the value measured on the lowest temperature side was taken as the melting point of the nonwoven fabric.

### [Measurement conditions]

Temperature range: room temperature to 250°C
Rate of temperature rise: 5°C/min

### (Mean fiber diameter of thermoplastic resin fiber)

The mean fiber diameter (µm) of thermoplastic resin fibers constituting a nonwoven fabric as a resin material layer was measured by averaging the values of the fiber diameters measured for at least 30 fibers using an optical microscope. A VHX-5000 manufactured by Keyence Corporation was used as a microscope and observed at a magnification of 300x.

### (Molecular weight of thermoplastic resin)

The molecular weight (the number-average molecular weight Mn and the weight-average molecular weight Mw) of a thermoplastic resin constituting a thermoplastic resin fiber were each measured by GPC method. Specifically, a nonwoven fabric sample was dissolved in HFIP (hexafluoroisopropanol) overnight to obtain a concentration of 1 mg/mL; then, the next day, filtered using a 0.5µm membrane filter; and the filtrate was measured under the following conditions.
Apparatus: HPLC-8320GPC EcoSEC manufactured by Tosoh Corporation
Column: TSK-gel SuperHM-MX-2
Mobile phase: 5mM HFIP with sodium trifluoroacetate
Flow rate: 0.3 mL/min
Column temperature: 40°C
Injection volume: 20µL
Standard PMMA: EasiVial PM
Measurement concentration: 1mg/mL
Detector: RI (Refractive Index Detector)

### (Polydispersity of thermoplastic resin)

The polydispersity Mw/Mn of a thermoplastic resin constituting a thermoplastic resin fiber was calculated from the number-average molecular weight Mn and the weight-average molecular weight Mw calculated by GPC method.

### (Cold-heat shock test)

A fiber-reinforced composite materials was subjected to 1000 times of cold-heat cycles using a cold-heat shock tester (TSA-73EH-W manufactured by Espec Co., Ltd.). One cycle of the cold-heat cycle was set to consist of a plateau zone of -55°C for 15 minutes, followed by a temperature change zone for 15 minutes reaching a temperature of 70°C, followed by a plateau zone of 70°C for 15 minutes, followed by a temperature change zone for 15 minutes returning to a temperature of -55° C. The cycle was repeated 1000 times.

### (Crack density)

The number of cracks in the cross section of inside of a test piece of a fiber-reinforced composite material after the cold-heat shock test was measured by microscopic observation. A VHX-5000 manufactured by Keyence Corporation was used as a microscope and observed at a magnification of 200x. Specifically, the test piece after the cold-heat shock test (width 80 mm× length 50 mm× thickness 5 mm) is cut into four equal parts of width 40 mm× length 25 mm, the cut surface in the thickness direction is mirror-polished, and the long side and the short side respectively are used as the observation surfaces. Observation area of the microcracks of the microscopic observation is 50 mm² or more, and the measured number of cracks is divided by the number of laminations (the number of ply) and the width of the observation surface (L(cm)), in order to calculate the crack density. The unit of crack density is: number/(cm·ply). The values of the crack density obtained from the observation of the long side and the short side are averaged to obtain the final crack density.

Evaluation criteria for "microcrack resistance" in Table 1 below are as follows:
"O (Good)" :The crack density was less than 0.5 /(cm·ply).
"X (Poor)" :The crack density was 0.5 pieces/(cm·ply) or more.

### (Compression after impact (CAI))

A carbon-fiber-reinforced resin composite material was cut into dimensions of 101.6 mm width by 152.4mm length to obtain a test piece for post-impact compression (CAI) testing. The test piece was used, and according to SACMA SRM 2R-94, 30.5J impact was imparted to damage the test piece, and the compression after impact CAI (in MPa) was measured. The crosshead speed of a test piece compression tester was set to 1 mm/min and measurements were performed for five test pieces.

### (Molding robustness)

The molding robustness of a carbon-fiber-reinforced resin composite (CFRP) was evaluated using matrix resins with different curing times, from the difference in the panel thickness of CFRPs after molding. Specifically, the thickness of a CFRP molded using a matrix resin M-1 described below (curing conditions: 180°C, 120 minutes), and the thickness of a CFRP molded using a matrix resin M-2 described below (curing conditions: 180°C, 30 minutes) were measured respectively, and the molding robustness of CFRP was evaluated from the absolute values of the differences thereof (an absolute value of the difference in thicknesses). The thicknesses of the CFRPs were measured using a micrometer.

The criteria for molding robustness in Table 1 below are as follows:
"O (Good)": the absolute value of the difference in the above-described thicknesses was less than 0.20 mm.
"X (Poor)": the absolute value of the difference in the above-described thicknesses was greater than or equal to 0.20 mm.

### (MVR)

MVR (Melt Volume Rate) of a thermoplastic resin fiber constituting a nonwoven fabric as a resin material layer was measured according to JIS K7210-1 B method. The measurement conditions are as follows:
Apparatus: MELT INDEXER G-02 (manufactured by Toyo Seiki Seisaku-sho Ltd.)
Test temperature: 275°C
Nominal load: 2.16 kg

### <Components>

Materials used in Examples and Comparative Examples are described below.

### (Reinforcing fiber)

The following carbon fiber bundles were used as the reinforcing fibers:
Carbon fiber bundle "Tenax (registered trademark)" (manufactured by Teijin Limited, product number: HTS45-12K, tensile strength 4.5 GPa, tensile modulus 240 GPa, and linear expansion coefficient -0.5×10⁻⁶/K)

### (Unidirectional woven fabric (UD))

Unidirectional woven fabric S-1: Dry Reinforcements Woven Fabric DRWF HTS45-UD; reinforced fiber HTS45-12K; reinforced fiber areal weight 194g/m²; manufactured by TEIJIN CARBON EUROPE GmbH

This reinforcing fiber substrate (unidirectional woven fabric S-1) is a woven fabric composed of the above-mentioned carbon fiber bundle HTS45-12K as reinforcing fibers aligned in one direction as warp yarns and the following auxiliary yarns as weft yarns, and is a so-called cord fabric.
- Weft auxiliary yarn (weft yarn) : Grilon (registered trademark) manufactured by EMS-CHEMIE AG : K-85; a composite fiber of a polyamide resin and a polyester resin; a fineness 200 dtex; number of single yarns 44; melting point 86°C

### (Auxiliary yarn as stitch yarn)

For a stitch yarn as an auxiliary yarn, stitch yarn A-1 was used (JOINER (registered trademark) H-Type manufactured by Fuji Spinning Holdings Co., Ltd.; a copolymerized polyamide resin fiber; fineness 33 dtex; number of single yarns 5; melting point 131°C).

### (Matrix resin)

As a matrix resin of a carbon-fiber-reinforced resin composite material (a composite), epoxy resins which are a liquid thermosetting resin were used. The compositions thereof (M-1 and M-2) are as follows.
·Matrix resin M-1 (Curing conditions: 180°C, 120 min):

### (Epoxy resin)

- Tetraglycidyl-4,4'-diaminodiphenylmethane (Araldite (registered trademark) MY721 manufactured by Huntsman Japan KK)
   56 parts by mass
- N,N-diglycidylaniline (manufactured by Nippon Kayaku Co., Ltd.; GAN (product name))
   30 parts by mass

### (Resin particle component)

- MX-414 (manufactured by Kaneka Corporation; MX-414 (product name); a mean particle diameter of 0.11 µm; a masterbatch wherein a particulate polybutadiene rubber component is dispersed in a glycidyl amine type four-functional epoxy resin at a concentration of 25% by mass)
   19 parts by mass

### (Curing agent)

- 4,4'-diamino-3,3'-diisopropyl-5,5'-dimethyldiphenylmethane (manufactured by Arxada Japan Co., Ltd.; Lonzacure (registered trademark) M-MIPA d)
   31 parts by mass
- Diethyltoluenediamine (manufactured by Arxada Japan Co., Ltd.; Lonzacure (registered trademark) DETDA80)
   21 parts by mass
- Matrix resin M-2 (Curing conditions: 180°C, 30 min):

### (Epoxy resin)

- Tetraglycidyl-4,4'-diaminodiphenylmethane (manufactured by Huntsman Japan Co.; Araldite (registered trademark) MY721)
   17.5 parts by mass
- N,N-diglycidylaniline (manufactured by Nippon Kayaku Co., Ltd.; GAN (product name)) 11.4 parts by mass

### (Resin particle component)

- MX-414 (manufactured by Kaneka Corporation; MX-414 (product name); a mean particle diameter of 0.11 µm; a masterbatch wherein a particulate polybutadiene rubber component is dispersed in a glycidyl amine type four-functional epoxy resin at a concentration of 25% by mass)
   12.1 parts by mass

### (Curing agent)

- 4,4'-diamino-3,3'-diisopropyl-5,5'-dimethyldiphenylmethane (manufactured by Arxada Japan Co., Ltd.; Lonzacure (registered trademark) M-MIPA d)
   9.8 parts by mass
- Diethyltoluenediamine (manufactured by Arxada Japan Co., Ltd.; Lonzacure (registered trademark) DETDA80)
   8.8 parts by mass
- 4-methoxybenzylamine (manufactured by Tokyo Chemical Industry Co., Ltd.; 4MxBA) 1.0 parts by mass

### (Raw material for resin material layer)

As a thermoplastic resin of a thermoplastic resin fiber constituting a resin material layer, the following was used.
·Polyamide 11(PA11; melting point 184 to 187°C; manufactured by ARKEMA K.K..; product name: Rilsan)
·Polyamide 612 (PA612; melting point 216°C.; manufactured by Daicel Evonik Ltd., product name: VESTAMID DX9308)
·Polyamide 6/polyamide 12 copolymer (PA6/PA12 copolymer; melting point 197°C; manufactured by EMS-CHEMIE Co., Ltd.; product name: Grilon K-203)
·Polyamide 12 (PA12; melting point 177°C; manufactured by Daicel Evonik Co., Ltd.; product name: Diamide L1640)
·Polyamide 1010 (PA12; melting point 199°C; manufactured by Daicel Evonik Co., Ltd.; product name: Bestamide TERRA DS16)
·Polyamide 610 (PA610; melting point 222°C; manufactured by Daicel Evonik Co., Ltd.; product name: TeRRA DS16)
·Polyamide 66 (PA66, melting point 268° C.)

### (Resin material layer)

As a resin material layer, the following nonwoven fabrics produced by the melt-blowing process using the above-described resin raw material were used.
·Nonwoven fabric B-1: polyamide PA11; mean fiber diameter 6.1 µm; areal weight 5g/m²
·Nonwoven fabric B-2: polyamide PA612; mean fiber diameter 6.6 µm; areal weight 5g/m²
·Nonwoven fabric B-3: polyamide PA12; mean fiber diameter 7.7 µm; areal weight 5g/m²
·Nonwoven fabric B-4: polyamide PA1010; mean fiber diameter 7.7 µm; areal weight 5g/m²
·Nonwoven fabric B-5: polyamide PA610; mean fiber diameter 7.6 µm; areal weight 5g/m²
·Nonwoven fabric B-6: polyamide PA66; mean fiber diameter 6.3µm; areal weight 5g/m²

Further, as a resin material layer, the following nonwoven fabrics produced by the spunbond manufacturing method were used.
·Nonwoven fabric B-7: polyamide PA11; mean fiber diameter 38.0 µm; areal weight 6 g/m²
·Nonwoven fabric B-8: polyamide PA6/PA12 copolymer; mean fiber diameter 42.9 µm; areal weight 4 g/m²
·Nonwoven fabric B-9: polyamide PA12; mean fiber diameter 49.5 µm; areal weight 6 g/m²

### <<Examples 1 to 5 and Comparative Examples 1 to 6>>

Reinforcing fiber substrates according to Examples 1 to 5 and Comparative Examples 1 to 6 were prepared, and carbon-fiber-reinforced composite material (CFRP) were further produced from these reinforcing fiber substrates, and their physical properties were evaluated.

In Examples 1-3 and Comparative Examples 1-6, reinforcing fiber substrates having a non-crimp fabric (NCF) were produced.

### Example 1

### (Preparation of reinforcing fiber substrate having non-crimp fabric (NCF))

Four reinforcing fiber sheets were prepared, wherein each of the sheet has 200 reinforcing fibers (carbon fiber bundles) as described above aligned in one direction, and the reinforcing fiber sheets were stacked with different angles in the order of -45°, 0°, +45°, and 90°, and the nonwoven fabrics B-1 were further disposed between the respective layers of the reinforcing fiber sheets. In this way, a stacked sheet was produced in which four reinforcing fiber sheets having fibers aligned in one direction were stacked with nonwoven fabrics disposed therebetween.

Subsequently, the reinforcing fiber substrate according to Example 1 (reinforcing fiber areal weight per layer: 190 g/m²; stitch yarn usage amount: 4 g/m²; reinforcing fiber substrate total areal weight: 760 g/m²) was obtained by sewing (stitching) through the stacked sheets in the thickness direction with the above-described stitch yarn A-1 as an auxiliary yarn.

### (Production of carbon-fiber-reinforced resin composite material)

Subsequently, the Resin Transfer Molding method (RTM method) was used to produce a carbon-fiber-reinforced composite material using the obtained reinforcing fiber substrate and a liquid thermosetting resin. First, on the substrate, a peel cloth Release Ply C (manufactured by AIRTECH), which is a substrate provided with a releasing function, and a resin-diffusing substrate Resin Flow 90HT (manufactured by AIRTECH) were disposed. Thereafter, hoses for forming a resin inlet and a resin outlet were placed, and the entire assembly was covered with a nylon bag film, sealed with a sealant tape, and the inside was evacuated. Subsequently, an aluminum plate was heated to 120°C, the inside of the bag was depressurized to 5 Torr or less, and then a liquid thermosetting resin (matrix resin M-1) (35 parts by mass with respect to 100 parts by mass of the substrate) heated to 100°C was injected into the vacuum system through the resin injection port. The injected liquid thermosetting resin was filled in the bag, and the temperature was raised to 180°C while the substrate has been impregnated with the injected liquid thermosetting resin, and the thermosetting resin was cured by holding at 180°C for 120 minutes, thereby obtaining a carbon-fiber-reinforced composite material (CFRP).

When a matrix resin M-2 was used as a liquid thermosetting resin, the liquid thermosetting resin was injected in the same manner as described above, and the temperature was raised to 180°C and then held at 180°C for 30 minutes to cure the thermosetting resin, in order to obtain a carbon-fiber-reinforced composite material (CFRP).

The obtained carbon-fiber-reinforced composite material (one using a matrix resin M-1) was subjected to measurements for CAI (compression after impact) and crack density. Further, the molding robustness was evaluated as described above based on the carbon-fiber-reinforced composite materials produced using M-1 and M-2 as matrix resins. The results are shown in Table 1 below.

### Example 2

The reinforcing fiber substrate and the carbon-fiber-reinforced composite material according to Example 2 were produced and evaluated in the same manner as in Example 1, except that the thermoplastic resin fibers constituting the resin material layer had the properties shown in Table 1 below. The evaluation results are shown in Table 1 below.

### Example 3

The reinforcing fiber substrate and the carbon-fiber-reinforced composite material according to Example 3 were produced and evaluated in the same manner as in Example 1, except that the thermoplastic resin fibers constituting the resin material layer had the properties shown in Table 1 below. The evaluation results are shown in Table 1 below.

### Examples 4 and 5

In Examples 4 and 5, a reinforcing fiber substrate having a unidirectional woven fabric (UD) was produced.

### (Production of reinforcing fiber substrate)

The above-described nonwoven B-1 or nonwoven B-7 was disposed on the above-described unidirectional woven fabric S-1 to prepare the reinforcing fiber substrates according to Examples 4 and 5, respectively. The reinforcing fiber substrate and the carbon-fiber-reinforced composite material according to Examples 4 and 5 were produced and evaluated in the same manner as in Example 1, except that the reinforcing fiber substrates obtained as above were used. The evaluation results are shown in Table 1 below.

### Comparative Examples 1 to 6

The reinforcing fiber substrates and the carbon-fiber-reinforced composite materials according to Comparative Examples 1 to 6 were each produced and evaluated in the same manner as in Example 1, except that the thermoplastic resin fibers constituting the resin material layer had the properties shown in Table 1 below. The evaluation results are shown in Table 1 below.

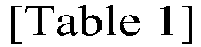

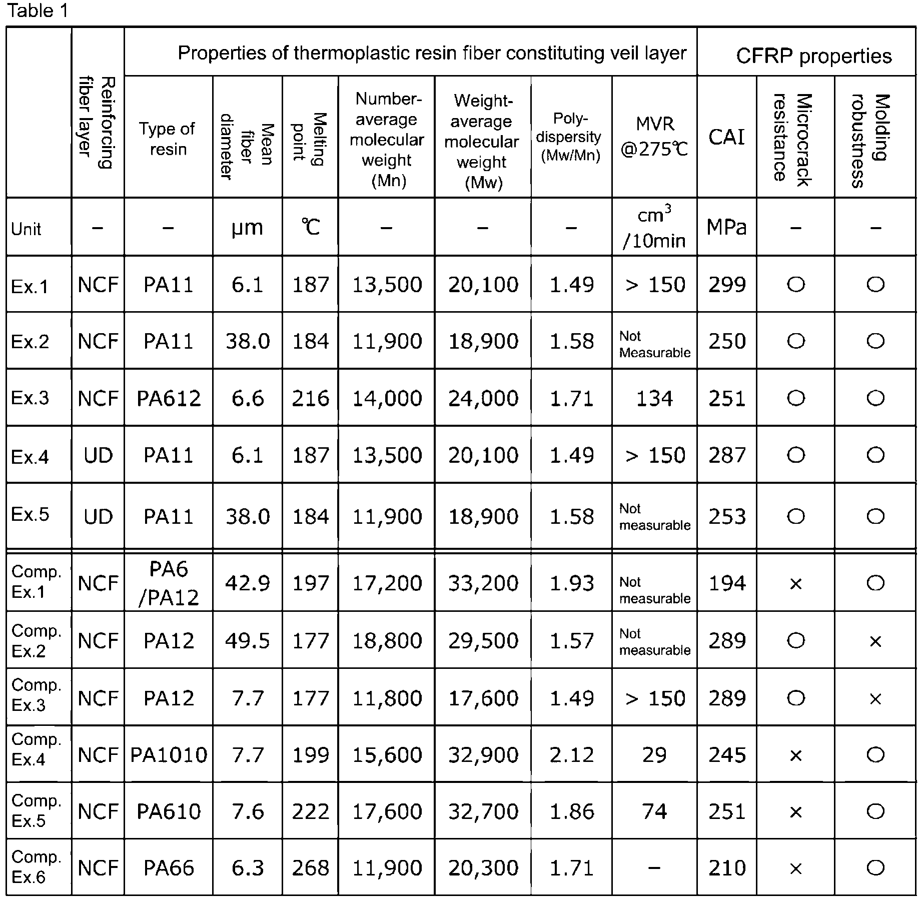

In Examples 1 to 5, the resin of the thermoplastic resin fibers constituting the resin material layer (veil layer) had a melting point of 184°C to 216°C and the molecular weight Mw of 18,900 to 24,000, and good microcrack resistance and mechanical strength (CAI) and molding robustness were confirmed.

On the other hand, in Comparative Examples 1, 4, and 5, since the resin of the thermoplastic resin fiber had a relatively high melting point of 197 to 222°C, the molding robustness was good, but the microcrack resistance was poor, due to the higher molecular weight Mw of 32,700 to 33,200. Comparative Example 1 showed relatively low CAI value, while Comparative Examples 4 and 5 showed relatively high CAI value.

In Comparative Examples 2 to 3, since the resin of the resin fibers constituting the veil layer had a low melting point of 177°C, CAI (compression after impact) and the microcrack resistance were good, but the molding robustness was poor.

In Comparative Example 6, since the resin of the thermoplastic resin fibers constituting the veil layer had an excessively high melting point of 268°C, the molding robustness was good, but CAI (compression after impact) and the microcrack resistance were poor. It is considered that, when the melting point of a resin of a thermoplastic resin fiber is excessively high, even when the molecular weight is relatively low, the entanglement of molecular chains of the resin constituting the veil layer is less likely to be loosened, under the heat during the curing treatment, and thus the affinity (adhesion) between the thermoplastic resin fibers constituting the veil layer and the matrix resin is reduced, which results in the occurrence of microcracks.

### [Reference signs]

- 10, 30: Reinforcing fiber substrate
- 40: Non-crimp fabric
- 22, 42: Reinforcing fiber
- 24, 44: Auxiliary yarn
- L: Direction
- 110, 310, 312, 314, 316: Resin material layer
- 130, 330, 340, 350: Reinforcing fiber layer

## Claims

1. A reinforcing fiber substrate, comprising
one or more reinforcing fiber layers comprising reinforcing fibers, and
one or more resin material layers comprising fibers of a thermoplastic resin,
wherein the melting point of the thermoplastic resin is more than 180°C and 250°C or less,
and wherein the weight-average molecular weight Mw of the thermoplastic resin is 15,000 to 28,000.

2. The reinforcing fiber substrate according to claim 1, wherein the thermoplastic resin has a polydispersity (Mw/Mn) of 1.40 to 1.80.

3. The reinforcing fiber substrate according to claim 1 or 2, wherein the thermoplastic resin is a polyamide resin or a polyester resin.

4. The reinforcing fiber substrate according to claim 1 or 2, wherein the thermoplastic resin is a polyamide resin.

5. The reinforcing fiber substrate according to claim 1 or 2, wherein a mean fiber diameter of the fibers of the thermoplastic resin is 1µm to 60µm.

6. The reinforcing fiber substrate according to claim 1 or 2, wherein the one or more resin material layers are made of a nonwoven fabric containing fibers of a thermoplastic resin.

7. The reinforcing fiber substrate according to claim 6, wherein the one or more resin material layers are made of a long-fiber nonwoven fabric containing fibers of a thermoplastic resin.

8. The reinforcing fiber substrate according to claim 1 or 2, wherein the resin material layer or each of the plurality of the resin material layers is disposed on a surface of the reinforcing fiber layer or on a surface of any of the plurality of the reinforcing fiber layers.

9. The reinforcing fiber substrate according to claim 1 or 2, wherein the reinforcing fiber layer is a unidirectional woven fabric having the reinforcing fibers aligned in one direction as warp yarns and an auxiliary yarn as a weft yarn.

10. The reinforcing fiber substrate as claimed in claim 1 or 2, wherein the reinforcing fiber substrate comprises at least two said reinforcing fiber layers stacked one on top of the other, each of said at least two reinforcing fiber layers being composed of said reinforcing fibers aligned in one direction, said at least two reinforcing fiber layers being stitched by a stitch yarn as an auxiliary yarn.

11. The reinforcing fiber substrate according to claim 1 or 2, wherein the reinforcing fiber is a carbon fiber.

12. A preform material comprising the reinforcing fiber substrate according to claim 1 or 2 and a binder resin.

13. A method for producing a preform material, comprising subjecting a composite body comprising the reinforcing fiber substrate according to claim 1 or 2 and a binder resin to a heat treatment under pressure.

14. A fiber-reinforced composite material comprising the reinforcing fiber substrate according to claim 1 or 2 and a matrix resin impregnated in the reinforcing fiber substrate.

15. A method for producing a fiber-reinforced composite material, comprising:
impregnating the reinforcing fiber substrate according to claim 1 or 2 with a matrix resin; and
subjecting the reinforcing fiber substrate impregnated with the matrix resin to a heat curing treatment, in order to obtain a fiber-reinforced composite material.
